# DEMANDE DE BREVET EUROPEEN

(11) **EP 1 515 261 A1**
(43) Date de publication de la demande: **16.03.2005**
(21) Numéro de dépôt: 04104374.6
(22) Date de dépôt: 10.09.2004
(51) Int. Cl.: G06K 7/00

(54) **Lecteur de carte sans contact**

(30) Priorité: 10.09.2003 FR 0350519
(71) Demandeur: ASCOM, 07500 Guilherand-Granges (FR)
(72) Inventeur: ROUX, Pascal, 26120, CHABEUIL (FR)
(74) Mandataire: de Beaumont, Michel

(57) **Abrégé**

L'invention concerne un lecteur (10) de carte sans contact comprenant une enceinte (12) contenant un circuit de commande relié à une première antenne (14) et adapté à échanger des données à distance par le couplage entre la première antenne et l'antenne d'une carte sans contact. L'enceinte contient un dispositif de diagnostic (20) comprenant une seconde antenne (22) reliée à un circuit de test (24) par l'intermédiaire d'un interrupteur (26) et un moyen (36, 38) pour fournir un signal de commande (C) de l'interrupteur, ledit circuit de test étant adapté, en l'absence de présentation de carte sans contact, à échanger des données avec le circuit de commande par le couplage des première et seconde antennes lorsque l'interrupteur est fermé pour réaliser un diagnostic du lecteur.

## Description

La présente invention concerne un lecteur de carte sans contact. Plus particulièrement, la présente invention concerne le diagnostic d'un lecteur de carte sans contact.

Un lecteur de carte sans contact comprend généralement une inductance, par exemple constituée d'une unique spire, appelée également antenne du lecteur, reliée à un circuit de traitement du signal. Un utilisateur place, à proximité de l'antenne du lecteur, une carte sur laquelle est fixé un circuit intégré, appelé puce de la carte, relié à une inductance constituant l'antenne de la carte. Un couplage se produit entre les deux antennes permettant l'échange de données entre le circuit de traitement du lecteur et la puce de la carte. Il existe différents types de puces qui communiquent avec le circuit de traitement selon des protocoles d'échange de données différents. Un lecteur doit, de préférence, être adapté à communiquer avec tout type de puce. En outre, un lecteur doit être adapté à communiquer avec une puce lorsque la carte portant la puce est placée devant l'antenne du lecteur à une distance variant dans une plage déterminée, par exemple de 0 à 10 centimètres.

Il est nécessaire de réaliser régulièrement un diagnostic du lecteur pour déterminer s'il fonctionne correctement. Une panne grave peut correspondre au cas où le lecteur ne peut plus communiquer avec une carte indépendamment du type de la puce associée à la carte ou de la distance séparant la carte de l'antenne du lecteur. Un exemple de panne partielle correspond au cas où le lecteur communique avec une puce d'un type déterminé mais ne parvient plus à communiquer avec des puces d'autres types. Un autre exemple de panne partielle correspond au cas où le lecteur communique avec une puce seulement lorsque la carte portant la puce est placée à une distance de l'antenne du lecteur appartenant à une plage différente de la plage de distances habituelle.

Généralement, le diagnostic d'un lecteur est réalisé en approchant du lecteur une carte sans contact classique utilisée comme carte de test. On vérifie alors si l'échange de données entre le lecteur et la puce de la carte se déroule correctement. Un tel diagnostic nécessite donc la présence d'un opérateur. En outre, un tel diagnostic permet de tester seulement si le lecteur parvient à communiquer avec une puce d'un type déterminé, celui de la puce portée par la carte de test. Pour s'assurer que le lecteur peut communiquer avec une puce de type différent, il est nécessaire d'utiliser une nouvelle carte de test portant une telle puce, ce qui augmente considérablement le nombre d'opérations à effectuer lors d'un diagnostic. De plus, il est difficile par un tel diagnostic de vérifier si le lecteur peut communiquer avec une puce de carte sans contact pour toutes les valeurs de distances normalement acceptées séparant l'antenne du lecteur de la carte. En outre, un tel diagnostic est délicat à mettre en oeuvre pour un groupe de lecteurs dans la mesure où une carte de test doit être présentée devant chaque lecteur à diagnostiquer.

La présente invention vise un lecteur de carte sans contact permettant la réalisation d'un diagnostic automatique du lecteur.

Un autre objet de la présente invention est d'obtenir un lecteur de carte sans contact dont le diagnostic peut être commandé à distance.

Pour atteindre ces objets, la présente invention prévoit un lecteur de carte sans contact comprenant une enceinte contenant un circuit de commande relié à une première antenne et adapté à échanger des données à distance par le couplage entre la première antenne et l'antenne d'une carte sans contact, dans lequel l'enceinte contient un dispositif de diagnostic comprenant une seconde antenne reliée à un circuit de test par l'intermédiaire d'un interrupteur et un moyen pour fournir un signal de commande de l'interrupteur, ledit circuit de test étant adapté, en l'absence de présentation de carte sans contact, à échanger des données avec le circuit de commande par le couplage des première et seconde antennes lorsque l'interrupteur est fermé pour réaliser un diagnostic du lecteur.

Selon un mode de réalisation de l'invention, le lecteur comprend un support, la première antenne comprenant une spire au niveau d'une face du support, la spire délimitant une portion intérieure de ladite face, la seconde antenne étant située au niveau de la portion intérieure.

Selon un mode de réalisation de l'invention, le lecteur comprend un premier support, la première antenne comprenant une spire sur une face sensiblement plane du premier support, et un second support, la seconde antenne étant située sur une face sensiblement plane du second support.

Selon un mode de réalisation de l'invention, le lecteur comprend un moyen pour déplacer le second support par rapport au premier support dans une direction sensiblement parallèle à la face du premier support pour simuler la présentation d'une carte sans contact à une distance variable du lecteur.

Selon un mode de réalisation de l'invention, le lecteur comprend un moyen pour déplacer le second support par rapport au premier support dans une direction sensiblement perpendiculaire à la face du premier support pour simuler la présentation d'une carte sans contact à une distance variable du lecteur.

Selon un mode de réalisation de l'invention, le lecteur comprend un moyen pour modifier l'inductance de la seconde antenne et/ou le coefficient de couplage de la seconde antenne avec la première antenne pour simuler la présentation d'une carte sans contact à une distance variable du lecteur.

Selon un mode de réalisation de l'invention, le lecteur comprend un moyen pour sélectionner une valeur d'inductance de la seconde antenne et/ou du coefficient de couplage de la seconde antenne avec la première antenne parmi plusieurs valeurs discrètes.

Selon un mode de réalisation de l'invention, le lecteur comprend un premier circuit de test, un second circuit de test et un moyen pour connecter la seconde antenne sélectivement au premier ou au second circuit de test, le premier circuit de test étant adapté, lorsqu'il est connecté à la seconde antenne, à échanger des données avec le circuit de commande selon des premières conditions de fonctionnement du circuit de commande, le second circuit de test étant adapté, lorsqu'il est connecté à la seconde antenne, à échanger des données avec le circuit de commande selon des secondes conditions de fonctionnement du circuit de commande.

Selon un mode de réalisation de l'invention, le circuit de commande est relié à la première antenne par un câble coaxial, le moyen pour fournir le signal de commande de l'interrupteur comprenant un filtre passe bas relié au câble coaxial.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon schématique, un exemple de réalisation d'un lecteur de carte sans contact selon l'invention ;
la figure 2 représente une variante du lecteur de la figure 1 ; et
les figures 3 à 5 représentent trois exemples de réalisation plus détaillés du lecteur de carte sans contact de la figure 1.

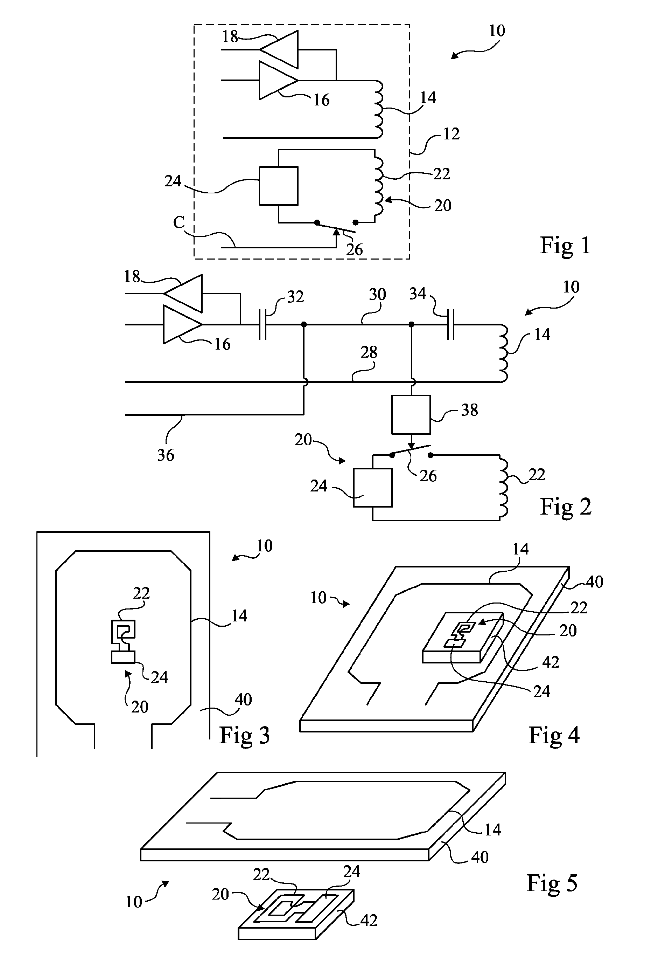

La figure 1 représente un lecteur 10 constitué d'une enceinte 12 (représentée par une ligne pointillée) contenant une antenne 14, appelée antenne du lecteur, reliée à un amplificateur d'émission 16 et à un amplificateur de réception 18, eux-mêmes reliés à un circuit de traitement de données non représenté, appelé circuit de commande du lecteur. Lors du fonctionnement normal du lecteur 10, une carte à lecture sans contact, non représentée, comprenant une antenne reliée à un circuit intégré, appelé puce de la carte, est placée à proximité de l'enceinte 12 au niveau de l'antenne 14 du lecteur 10. Un couplage se produit entre l'antenne 14 du lecteur 10 et l'antenne de la carte permettant l'échange de signaux entre le circuit de commande du lecteur et la puce de la carte.

La présente invention consiste à prévoir, dans l'enceinte 12, un dispositif de diagnostic 20 ayant une structure similaire à celle du circuit porté par une carte sans contact. Le dispositif de diagnostic 20 comprend une antenne de diagnostic 22, disposée dans l'enceinte 12 et reliée à un circuit de traitement de données dédié à la réalisation d'un diagnostic, appelé puce de diagnostic 24. Un interrupteur 26 est disposé entre une borne de l'antenne de diagnostic 22 et une borne de la puce de diagnostic 24. L'interrupteur 26 est commandé à distance par l'intermédiaire d'un signal de commande C. Il est, par exemple, réalisé par un ou plusieurs transistors.

Lorsque l'interrupteur 26 est ouvert, il n'y a aucune interaction entre l'antenne de diagnostic 22 et l'antenne 14 du lecteur 10. Le lecteur 10 peut alors fonctionner normalement pour la lecture sans contact de cartes placées à l'extérieur de l'enceinte 12 à proximité de l'antenne 14 du lecteur 10. Lorsque l'interrupteur 26 est fermé, un couplage se produit entre l'antenne de diagnostic 22 et l'antenne 14 du lecteur 10 permettant l'échange de données entre la puce de diagnostic 24 et le circuit de commande du lecteur. Il est alors possible de déceler un mauvais fonctionnement du lecteur 10 par l'analyse des données échangées avec la puce de diagnostic 24. Un diagnostic du lecteur 10 est effectué lorsque aucune carte n'est présentée au niveau de l'antenne 14 du lecteur 10 hors de l'enceinte 12.

La puce de diagnostic 24 peut fonctionner de façon similaire à une puce équipant habituellement une carte utilisée avec le lecteur 10. Toutefois, la puce de diagnostic 24 n'est pas destinée à réaliser toutes les fonctions d'une puce classique équipant une carte à lecture sans contact. En effet, la puce de diagnostic 24 ne participe qu'à la réalisation d'un diagnostic pour déceler une panne de fonctionnement du lecteur 10. Il n'est donc pas nécessaire que la puce de diagnostic 24 ait une structure aussi complexe qu'une puce classique équipant une carte à lecture sans contact. En particulier, la puce de diagnostic 24 peut comprendre des composants reproduisant suffisamment correctement le fonctionnement d'une puce classique seulement pour les étapes nécessaires à la réalisation du diagnostic du lecteur 10.

Le signal de commande de l'interrupteur 26 peut de façon avantageuse être fourni par un centre de diagnostic à distance relié à un ou plusieurs lecteurs équipés du dispositif de diagnostic selon l'invention. Le diagnostic d'un ensemble de lecteurs peut alors être réalisé de façon automatique par un unique centre à distance.

La figure 2 représente une variante du lecteur 10 dans laquelle l'antenne 14 du lecteur 10 est déportée du circuit de commande et reliée à celui-ci par un câble coaxial comportant une ligne de référence 28 et une ligne active 30. Le dispositif de diagnostic 20 est identique à l'exemple de réalisation de la figure 1. Un premier condensateur de couplage 32 est disposé entre les amplificateurs 16, 18 et la ligne active 30 et un second condensateur de couplage 34 est disposé entre la ligne active 30 et l'antenne 14 du lecteur 10. Un fil conducteur 36 conduit le signal de commande jusqu'à la ligne active 30 en aval du premier condensateur de couplage 32. Un filtre passe-bas 38 est connecté à la ligne active 30 en amont du second condensateur de couplage 34 et fournit le signal de commande à l'interrupteur 26 du dispositif de diagnostic 20. Une telle variante de l'invention permet d'adapter le dispositif de diagnostic 20 selon l'invention à un lecteur 10 à antenne 14 déportée.

La figure 3 représente un premier exemple de réalisation plus détaillé du lecteur 10 selon l'invention. Selon le premier exemple de réalisation plus détaillé, l'antenne 14 du lecteur 10 est constituée d'une spire unique réalisée sur un support 40. Les amplificateurs 16, 18 ne sont pas représentés. Le dispositif de diagnostic 20 est réalisé au niveau du support 40 à l'intérieur de la spire 14. Seules la puce 24 et l'antenne de diagnostic 22 sont représentées, l'antenne de diagnostic 22 étant, à titre d'exemple, représentée avec deux spires concentriques. La surface occupée par l'antenne de diagnostic 22 et le nombre de spires de l'antenne de diagnostic 22 déterminent la valeur de l'inductance de l'antenne de diagnostic 22. On peut alors fixer les caractéristiques du couplage entre l'antenne de diagnostic 22 et l'antenne 14 du lecteur 10. On peut ainsi simuler le couplage entre l'antenne 14 du lecteur 10 et une antenne d'une carte à lecture sans contact placée à une distance donnée du support 40 de l'antenne 14 du lecteur 10.

La figure 4 représente un second exemple de réalisation plus détaillé du lecteur 10 selon l'invention. Selon le deuxième exemple de réalisation, le dispositif de diagnostic 20 est réalisé au niveau d'un support auxiliaire 42 distinct du support 40 associé à l'antenne 14 du lecteur 10, et disposé dans l'enceinte du lecteur 10 (non représentée). Le support 42 est disposé au ras du support 40 de façon à pouvoir considérer que l'antenne de diagnostic 22 est sensiblement incluse dans le plan de l'antenne 14 du lecteur 10. Selon une variante du deuxième exemple de réalisation, l'antenne de diagnostic 22 est réalisée au niveau de la face du support auxiliaire 42 en vis-à-vis avec le support 40. Un mécanisme de déplacement, non représenté, est adapté à déplacer le support auxiliaire 42 par rapport au support 40 tout en maintenant le support auxiliaire 42 tangent au support 40. En modifiant la position relative entre l'antenne de diagnostic 22 et l'antenne 14 du lecteur 10, on peut modifier le couplage entre l'antenne de diagnostic 22 et l'antenne de lecteur 14 et simuler la présentation d'une carte à lecture sans contact devant le lecteur 10 à une distance variable. Une telle modification du couplage est notamment obtenue en déplaçant le support 42 de sorte que l'antenne de diagnostic 22 chevauche plus ou moins la spire unique de l'antenne 14 du lecteur 10. Le deuxième exemple de réalisation permet donc de réaliser le diagnostic du lecteur 10 comme si on présentait une carte à lecture sans contact portant la puce 24 à différentes distances devant l'antenne 14 du lecteur 10. Le deuxième exemple de réalisation permet notamment de détecter une panne partielle correspondant au cas où le lecteur 10 communique avec une carte à puce à lecture sans contact seulement lorsqu'elle est placée à proximité de l'antenne 14 du lecteur 10 à une distance appartenant à une plage de distances différentes de la plage pour laquelle le lecteur devrait normalement communiquer avec la puce de la carte.

La figure 5 représente un troisième exemple de réalisation plus détaillé du lecteur 10 selon l'invention. Selon le troisième exemple de réalisation, le support auxiliaire 42 associé au dispositif de diagnostic 20 est adapté à être déplacé par rapport au support 40 de l'antenne 14, tout en restant contenu dans l'enceinte, non représentée, du lecteur 10, dans une direction sensiblement perpendiculaire à la face du support 40 au niveau de laquelle est réalisée l'antenne 14 du lecteur 10. On peut alors tester le fonctionnement du lecteur 10 à différentes distances séparant l'antenne de diagnostic 22 de l'antenne 14 de lecteur 10. Le troisième mode de réalisation nécessite que l'enceinte du lecteur 10 contenant les supports 40, 42 soit suffisamment volumineuse pour permettre le déplacement du support auxiliaire 42 par rapport au support 40 pour effectuer des tests représentatifs des conditions de fonctionnement habituelles du lecteur 10.

Selon une variante des exemples de réalisation précédemment décrits, l'antenne de diagnostic 22 reliée à la puce 24 a une inductance et/ou un coefficient de couplage variables pouvant varier de façon continue ou discrète. Dans le dernier cas, l'antenne de diagnostic 22 est par exemple constituée de plusieurs spires, éventuellement concentriques, pouvant être court-circuitées de façon sélective pour modifier la valeur de l'inductance de l'antenne de diagnostic 22 et/ou son coefficient de couplage avec l'antenne 14 du lecteur 10. Une spire peut être court-circuitée au moyen d'un ou de plusieurs interrupteurs commandés à distance. On peut alors effectuer pour une même puce 24 la simulation d'un échange de données entre le circuit de commande du lecteur 10 et une carte à lecture sans contact portant la puce 24 et placée à différentes distances de l'antenne 14 de lecteur 10. L'antenne de diagnostic 22 peut être constituée par un ensemble d'antennes distinctes pouvant, au moyen d'interrupteurs, être connectées en série ou en parallèle, une ou plusieurs antennes de l'ensemble d'antennes pouvant, en outre, être court-circuitées de façon sélective.

Selon une autre variante des exemples de réalisation précédemment décrits, l'antenne de diagnostic 22 peut être reliée, de façon sélective, à différentes puces 24. Ceci permet de tester le lecteur 10 pour différentes conditions de fonctionnement avec des puces de différents types.

La présente invention comporte de nombreux avantages :
premièrement, elle permet de réaliser un diagnostic d'un lecteur de façon automatique dans des conditions de diagnostic déterminées et reproductibles ;
deuxièmement, elle permet de commander le déroulement du diagnostic du lecteur par un centre de diagnostic situé à distance du lecteur diagnostiqué, le centre de diagnostic pouvant piloter le diagnostic de plusieurs lecteurs ; et
troisièmement, elle permet de façon relativement simple de réaliser un diagnostic d'un lecteur pour différentes conditions de fonctionnement, notamment pour la lecture de différentes puces et pour différentes distances d'utilisation de cartes à puce à lecture sans contact.

Bien entendu, la présente invention est susceptible de diverses variantes et modifications qui apparaîtront à l'homme de l'art. En particulier, les déplacements du support auxiliaire 42 décrits dans les deuxième et troisième exemples de réalisation détaillés peuvent être combinés pour tester le fonctionnement du lecteur 10.

## Revendications

1. Lecteur (10) de carte sans contact comprenant une enceinte (12) contenant un circuit de commande relié à une première antenne (14) et adapté à échanger des données à distance par le couplage entre la première antenne et l'antenne d'une carte sans contact, **caractérisé en ce que** l'enceinte contient un dispositif de diagnostic (20) comprenant une seconde antenne (22) reliée à un circuit de test (24) par l'intermédiaire d'un interrupteur (26) et un moyen (36, 38) pour fournir un signal de commande (C) de l'interrupteur, ledit circuit de test étant adapté, en l'absence de présentation de carte sans contact, à échanger des données avec le circuit de commande par le couplage des première et seconde antennes lorsque l'interrupteur est fermé pour réaliser un diagnostic du lecteur.

2. Lecteur selon la revendication 1, comprenant un support (40), la première antenne (14) comprenant une spire au niveau d'une face du support, la spire délimitant une portion intérieure de ladite face, la seconde antenne (22) étant située au niveau de la portion intérieure.

3. Lecteur selon la revendication 1, comprenant un premier support (40), la première antenne (14) comprenant une spire sur une face sensiblement plane du premier support, et un second support (42), la seconde antenne (22) étant située sur une face sensiblement plane du second support.

4. Lecteur selon la revendication 3, comprenant un moyen pour déplacer le second support (42) par rapport au premier support (40) dans une direction sensiblement parallèle à la face du premier support pour simuler la présentation d'une carte sans contact à une distance variable du lecteur.

5. Lecteur selon la revendication 3, comprenant un moyen pour déplacer le second support (42) par rapport au premier support (40) dans une direction sensiblement perpendiculaire à la face du premier support pour simuler la présentation d'une carte sans contact à une distance variable du lecteur.

6. Lecteur selon la revendication 1, comprenant un moyen pour modifier l'inductance de la seconde antenne (22) et/ou le coefficient de couplage de la seconde antenne avec la première antenne (14) pour simuler la présentation d'une carte sans contact à une distance variable du lecteur.

7. Lecteur selon la revendication 6, comprenant un moyen pour sélectionner une valeur d'inductance de la seconde antenne (22) et/ou du coefficient de couplage de la seconde antenne avec la première antenne (14) parmi plusieurs valeurs discrètes.

8. Lecteur selon la revendication 1, comprenant un premier circuit de test (24), un second circuit de test et un moyen pour connecter la seconde antenne (22) sélectivement au premier ou au second circuit de test, le premier circuit de test étant adapté, lorsqu'il est connecté à la seconde antenne, à échanger des données avec le circuit de commande selon des premières conditions de fonctionnement du circuit de commande, le second circuit de test étant adapté, lorsqu'il est connecté à la seconde antenne, à échanger des données avec le circuit de commande selon des secondes conditions de fonctionnement du circuit de commande.

9. Lecteur selon la revendication 1, dans lequel le circuit de commande est relié à la première antenne (14) par un câble coaxial (28, 30), le moyen (36, 38) pour fournir le signal de commande de l'interrupteur (26) comprenant un filtre passe bas relié au câble coaxial.
